# EUROPÄISCHE PATENTSCHRIFT

(11) **EP 3 166 379 B1**
(45) Veröffentlichungstag und Bekanntmachung des Hinweises auf die Patenterteilung: **03.10.2018**
(21) Anmeldenummer: 15770436.2
(22) Anmeldetag: 09.07.2015
(51) Int. Cl.: A01B 3/42, A01B 15/00

(54) **DREHPFLUG MIT SCHWENKSTÜTZRAD ZUM ANBAU AN DEN PFLUGRAHMEN**
TURN PLOUGH WITH PIVOTING SUPPORT WHEEL FOR MOUNTING ON THE PLOUGH FRAME
CHARRUE PIVOTANTE AVEC ROUE DE PROFONDEUR ORIENTABLE DESTINÉE À ÊTRE MONTÉE SUR LE BÂTI DE LA CHARRUE

(30) Priorität: 09.07.2014 DE 102014109605
(43) Veröffentlichungstag der Anmeldung: 17.05.2017
(73) Patentinhaber: Lemken GmbH & Co. KG, 46519 Alpen (DE)
(72) Erfinder: SIEBERS, Josef, 46509 Xanten (DE)
(86) Internationale Anmeldenummer: PCT/DE2015/100292
(87) Internationale Veröffentlichungsnummer: WO 2016/004926

(56) Entgegenhaltungen:
- EP-A1- 0 181 947
- WO-A1-2010/108468
- DE-A1- 3 033 791
- DE-U1- 8 532 966
- DE-U1- 29 919 028
- DE-U1- 29 919 028

## Beschreibung

Die Erfindung betrifft ein Schwenkstützrad zum Anbau an einen Pflugrahmen eines Drehpfluges gemäß dem Oberbegriff des Patentanspruches 1.

Drehpflüge sind zur Tiefenführung ihrer Pflugwerkzeuge meist mit Stützrädern am Pflugrahmen versehen, welche den Abstand des Pflugrahmens zur Bodenoberfläche und somit die Eindringtiefe der Pflugwerkzeuge in den Boden vorgeben. Da der Pflugrahmen in Arbeitsposition schräg zur Fahrtrichtung angewinkelt steht, bieten sich bei der Drehbewegung des Pflugrahmens in Fahrtrichtung schwenkende Stützräder an. Diese benötigen in ihrer Schwenkbewegung einen kleineren Freiraum zum Pflugrahmen als entgegengesetzt der Fahrtrichtung schwenkende Stützräder, wenn diese nicht gerade am Ende des Pflugrahmens angeordnet sind. Grundsätzlich ist der Schwenkarm dieser Stützräder jedoch in Arbeitsstellung nach hinten geneigt, da so gerade bei wechselnden Kräften auf das Stützrad eine Eigenstabilisierung und Selbstausrichtung des Rades erfolgt. Dies verbessert oder ermöglicht erst eine stabile und exakte Seitenführung der Pflugwerkzeuge, wie in der deutschen Offenlegung DE 30 33 791 dargestellt. Um bei Aufsetzen des Stützrades auf den Boden und Vorwärtsfahrt den Schwenkarm nach hinten zu bewegen, ist dieser mit einer Verlängerung als Erdspieß versehen oder das Stützrad, wie beispielsweise aus der DE 75 38 474 U1 oder DE 25 54 273 C2, mit einer Bremsvorrichtung oder Ähnlichem ausgestattet. Ein weiteres Pendelstützrad aus dem Patent DE 25 45 009 C3 kann um eine Achse senkrecht verschwenkt werden, um in einer mittleren Transportstellung des Pflugrahmens als frei umlaufendes Transportrad zu dienen. Da diese Stützräder gelegentlich beim Aufsetzen doch nach vorne schwenken und dann ihrer Tiefenführungsfunktion nicht nachkommen, haben sich Stützräder durchgesetzt, welche grundsätzlich entgegen der Fahrtrichtung schwenken, aber einen größeren Schwenkfreiraum relativ zum Pflugrahmen brauchen, welcher dann aber beim Wenden des ausgehobenen Pfluges an Bodenfreiheit fehlt. Das deutsche Gebrauchsmuster DE 8532966 U1 schlägt ein Pendelstützrad vor, welches hinter dem Pflugrahmen angeordnet ist. Um ein Grenzpflügen zu ermöglichen, kann das Stützrad um eine vertikale Achse temporär nach vorn geklappt werden. Wie zuvor beschrieben, bedingt diese geschobene Position aber eine instabile Seitenführung
der Pflugwerkzeuge, welche gerade in der Schlussfurche ein schlechtes und ungerades Pflugbild hinterlässt. Dies gilt auch für ein geschobenes Stützrad, welches in dem deutschen Gebrauchsmuster DE 299 19 028 U1 vorgeschlagen wird.

Aufgabe der Erfindung ist es, ein Schwenkstützrad bereitzustellen, welches die oben genannten Nachteile vermeidet, die jeweiligen Vorteile jedoch in sich vereint. Diese Aufgabe wird durch die Merkmale des kennzeichnenden Teiles des Anspruches 1 gelöst.

Durch die Bewegung des Schwenkarmes und somit des Schwenkstützrades ausschließlich in Fahrtrichtung, also in Richtung des ziehenden Fahrzeuges, beschreibt das Schwenkstützrad beim Wenden des Pfluges oder des Pflugrahmens ein Halbkreissegment, welches, seitlich gesehen, im vorderen Bereich vor der Schwenkachse liegt. Das Schwenkstützrad verbleibt somit stets in einer geschobenen Position und kann mit zumindest einem Anschlag in Arbeitsstellung bis zum nächsten Schwenkvorgang festgesetzt werden. Durch die vorzugsweise freie oder zumindest teilweise freie Drehung des Schwenkarmes oder des Schwenkstützrades um die zweite Achse, welche vorzugsweise zumindest annähernd senkrecht zur ersten Achse steht, erhält das Stützrad selbstlenkende Eigenschaften, welche unterschiedliche Stütz- oder Lenkkräfte, die durch die geschobene oder nach vorn gerichtete Anordnung des Schwenkarmes auf das Stützrad oder den Pflugrahmen wirken, aufheben und somit eine exakte Seitenführung des Pfluges ermöglichen.

In einer erweiterten Erfindungsform ist die Schwenkbewegung des Armes oder des Stützrades um die zweite Achse von einer Mittelstellung nach rechts und links auf einen Schwenkwinkel von jeweils max. 60° begrenzt. Durch diese Begrenzung kann das Stützrad nicht komplett frei, sondern aus der Mittelstellung, welche die optimale Laufrichtung des Stützrades während der Pflugarbeit bildet, nur begrenzt nach links oder rechts auslenken. Gerade beim Aufsetzen des Stützrades bei Beginn der Pflugarbeit spurt das frei gelenkte Rad schnell in die Mittelstellung ein. Die Begrenzung kann durch Anschläge oder mit Federeinrichtungen bewerkstelligt werden. Letztere haben den Vorteil, dass das Stützrad bereits vorausgerichtet in Fahrtrichtung auf den Boden aufsetzt, aber gegen die Federkraft auslenken kann. Beschränkt man, wie zuvor beschrieben, den Drehwinkel des Stützrades auf einen Schwenkwinkel von jeweils max. 20° außerhalb der Mittelstellung, wird die seitliche Lenkbarkeit zwar eingeschränkt, jedoch die seitliche Ausladung des Stützrades vom Pflugrahmen verkürzt. Das Schwenkstützrad kann in seinem Bauraumbedarf noch weiter an den Pflugrahmen heranrücken oder noch weiter hinten am Pflugrahmen angeordnet werden.

In einer verbesserten Erfindungsform ist der Arm oder die Schwenklagerung in Richtung der zweiten Achse teleskopier- oder verschiebbar ausgeführt. Neben den Schwenkanschlägen um die erste Achse ist hiermit eine weitere, feinjustierbare Verstellmöglichkeit für die Arbeitstiefeneinstellung der Pflugkörper gegeben. Es bietet sich an, den Schwenkarm durch die Schwenklagerung, welche die zweite Achse bildet, hindurch zu schieben oder parallel zu dieser Achse zu verschieben. Dies kann durch ein Teleskoprohr, eine Kulissenführung, aber auch durch eine Mehrgelenkanordnung wie beispielsweise einem Parallelogramm erfolgen.

In einer anderen Erfindungsform ist das Schwenkstützrad, die Schwenklagerung oder der Arm um eine dritte Achse, welche annähernd senkrecht zur Bodenoberfläche oder zur Symmetrieebene des Pflugrahmens angeordnet ist, schwenkbar gelagert. Durch diese Bauart kann die Vorrichtung bei unterschiedlichen Winkelstellungen des Pflugrahmens zur Fahrtrichtung, von oben betrachtet, in ihrem Winkel zum Pflugrahmen verstellt werden.

In einer einfachen Erfindungsausführung entspricht die dritte Achse, um welche das Schwenkstützrad, die Schwenklagerung oder der Arm schwenkbar gelagert ist, der Schwenkachse eines Pflugkörpers oder Pflugkörperpaares. Durch diese Bauart kann die Schwenklagerung des Pflugkörpers zur Verstellung seiner Schnittbreite als Schwenklager für Winkeleinstellung des Schwenkstützrades, von oben betrachtet, zum Pflugrahmen genutzt werden. Die Vorrichtung bleibt hierdurch immer parallel zum Pflugwerkzeug und somit zur Fahrtrichtung ausgerichtet.

In einer besonders betriebssicheren Ausführung der Erfindung sind Mittel, welche die Schwenkgeschwindigkeit des Schwenkstützrades um die erste und/oder zweite Achse begrenzen, am Arm oder am Pflugrahmen angeordnet. Beispielsweise durch Dämpfungszylinder, Reibscheiben oder andere geeignete Elemente wird die Dynamik, welche beim Drehen des gesamten Pflugrahmens und somit beim Schwenken des Stützrades auftreten, entschärft.

In einer komfortablen Erfindungsausführung ist die Schwenkbewegung des Schwenkstützrades um die erste und/oder zweite Achse durch zumindest eine Fremdkrafteinrichtung unterstützend oder blockierend ausgebildet. Beispielsweise kann der Schwenkvorgang des Stützrades beim Drehen des Pfluges durch einen Hydraulikzylinder zeitgesteuert und definiert ausgeführt werden. Auch eine Fernbetätigung beispielsweise von Hydraulikzylindern oder anderen Stellmotoren ermöglicht eine komfortable Arbeitstiefeneinstellung der Pflugkörper während der Fahrt durch Veränderung des Schwenkwinkels des Schwenkstützrades um die erste Achse.

In einer anderen Erfindungsform ist die Bewegung des Schwenkstützrades oder des Armes um die zweite Achse mittels Arretiermittel in einer zur mittleren Position um 90 Grad verdrehten Stellung festsetzbar ausgebildet. Durch diese Anordnung kann das Stützrad um die zweite Achse in eine Lage parallel zur Symmetrieebene des Pflugrahmens festgesetzt werden. Bei einer mittleren Transportposition des Pflugrahmens kann das Schwenkstützrad um die erste Achse nachlaufen und einen Teil des Pfluggewichtes bei Straßenfahrt tragen, wenn die Schwenkwinkelbegrenzung um die erste Achse außer Betrieb gesetzt ist.

In einer bevorzugten Form der Erfindung ist das Schwenkstützrades in der Nähe des letzten oder des vorletzten Pflugkörpers befestigt. Je weiter das Schwenkstützrad vom Zugtraktor entfernt ist, desto mehr Pfluggewicht kann- statt über das Stützrad - vom Dreipunktgestänge des Zugtraktors traktionsverbessernd aufgenommen werden, indem die Hinterachse des Traktors stärker belastet wird. Gerade bei weit nach hinten ausladenden Pflügen wie vielscharigen Anbaudrehpflügen oder Karrendrehpflügen mit beweglichem Hinterteil bietet sich diese Stützradanordnung an.

Die Erfindung zeichnet sich insbesondere dadurch aus, dass durch Verwendung eines geschobenen Schwenkstützrades erforderlicher Bauraum und Schwenkfreiraum für ein Stützrad eines Pfluges sowohl gegenüber dem Pflugrahmen und seinen Anbauteilen als auch gegenüber der Bodenoberfläche während des Schwenk- oder Wendevorganges verringert werden kann. Auch das Grenzpflügen nahe Zaun- oder Weggrenzen wird über das weniger seitlich zur Fahrtrichtung ausladende, geschobene Stützrad erleichtert. Durch die geringere seitliche Ausladung des Schwenkstützrades können zudem Hebel, Arme, Halterungen und Lagerungen kleiner, leichter und kostengünstiger ausgelegt werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 einen Anbaudrehpflug in Seitenansicht von links
Fig.2 einen Anbaudrehpflug in Draufsicht
Fig.3 den hinteren Bereich eines Anbaudrehpfluges mit Schwenkstützrad in perspektivischer Darstellung

### Figurenbeschreibung

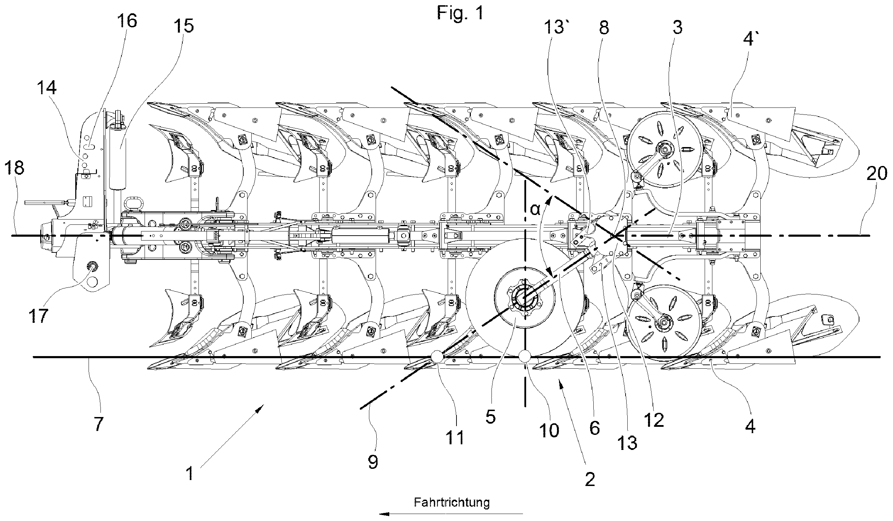

Figur 1 zeigt einen Drehpflug 1 in Seitenansicht. Hierbei handelt es sich um einen Anbaudrehpflug, welcher über den Anbaurahmen 14 sowie dessen obere und untere Koppelpunkte 16, 17 am Dreipunktkraftheber eines den Drehpflug ziehenden und tragenden Zugtraktors (nicht dargestellt) gekoppelt ist. Über den Dreipunktkraftheber des Zugtraktors kann der Drehpflug 1 von einer abgesenkten Arbeitsstellung in eine ausgehobene Stellung zum Transport oder zum Wenden des Pfluges bewegt werden. Zum Wenden des Pfluges ist der Pflugrahmen 3 über eine Wendeachse 18, welche drehbar im Anbaurahmen 14 gelagert ist, mittels eines Hydraulikzylinders 15 oder anderer Vorrichtungen um einen Winkel von etwa 180° von einer rechtswendenden in eine linkswendende Position schwenkbar. Hierfür ist der Hydraulikzylinder 15 einerseits mit dem Anbaurahmen 14 und an seinem anderen Ende über einen Hebel beabstandet zu Achse 18 mit dem Pflugrahmen 3 gelenkig verbunden. In einer mittleren Position kann der Pflugrahmen 3 mit dem Anbaurahmen 14 beispielsweise über einen Steckbolzen zu Transportzwecken verriegelt werden. An dem Pflugrahmen 3 sind hintereinander beabstandet mehrere rechts- und linkswendende Pflugwerkzeuge 4, 4' befestigt. Jeweils ein rechts- und ein linkswendendes Pflugwerkzeug 4, 4' bilden über die Mittelebene 20 des Pflugrahmens 4 eine vorzugsweise symmetrisch aufgebaute Befestigungseinheit. In Arbeitsstellung wird der Drehpflug 1 in Fahrtrichtung durch den Boden gezogen. Mit Fahrtrichtung ist die Vorwärtsfahrtrichtung des den Pflug in Arbeitsstellung ziehenden Traktors bezeichnet. Dabei schneiden die Pflugwerkzeuge 4, 4' einen Teil des Bodens unterhalb der Bodenoberfläche 7 ab und wenden diesen zur Seite. Im Vorderen Bereich wird die Arbeitstiefe der Pflugwerkzeuge durch den Dreipunktkraftheber des Zugtraktors und im hinteren Bereich durch die Stellung des Stützrades 2 zwischen Bodenoberfläche 7 und Pflugrahmen 3 vorgegeben. Durch die Änderung des Anstellwinkels (1/2 α) des Schwenkarmes 6 , welcher durch Achse 9 und der den Pflugrahmen 3 vorzugsweise horizontal und symmetrisch schneidende Mittelebene 20 aufgespannt wird, kann der Abstand des Stützrades 5 zur Mittelebene 20 des Pflugrahmens 3 oder beziehungsweise zur Bodenoberfläche 7 verändert werden. Hierdurch ändert sich die maximale Arbeitstiefe der Pflugkörper 4,4' im Boden. Durch die Anschlagmittel 13,13' kann die Winkelstellung als Endlage in Arbeitsposition festgesetzt werden. Die Anschlagmittel 13,13' können als pendelnde, in der Länge veränderbare Gewindespindeln, Kombinationen aus Lochleiste und Steckbolzen, ebenso aber auch als entsperrbarer Hydraulikzylinder oder anderer einfach oder doppelt wirkender Stellmotor ausgeführt sein. Der Stellmotor oder Hydraulikzylinder kann zugleich die Schwenkgeschwindigkeit reduzieren oder regeln. Das Stützrad 5 setzt in Arbeitsstellung durch Absenken des Drehpfluges 1 auf die Bodenoberfläche 7 auf und bildet den Radkontaktpunkt 10. Der Schnittpunkt 11, welche durch die nach vorne geneigte, verlängerte Lenkachse 9 und der Bodenoberfläche 7 gebildet wird, ist in Fahrtrichtung vom Radaufstandspunkt 10 beabstandet und bildet einen Führungspunkt, nach welchem das Rad 5 selbstlenkend nachläuft. Der Schwenkwinkel α, welcher die Bewegung des Stützrades in Fahrtrichtung beschreibt, soll einen Winkel von maximal 160 Grad nicht überschreiten, damit das Stützrad nicht nach hinten durchschwenkt oder in einer senkrechten Position stehen bleibt. Schwenkwinkel α kleiner 60 Grad sind ebenfalls weniger gut geeignet, da der Schnittpunkt 11 der Achse 9 mit der Bodenoberfläche 7 dann zu weit nach vorne von dem Radkontaktpunkt 10 entfernt liegt und eine instabile Radführung zur Folge hat.

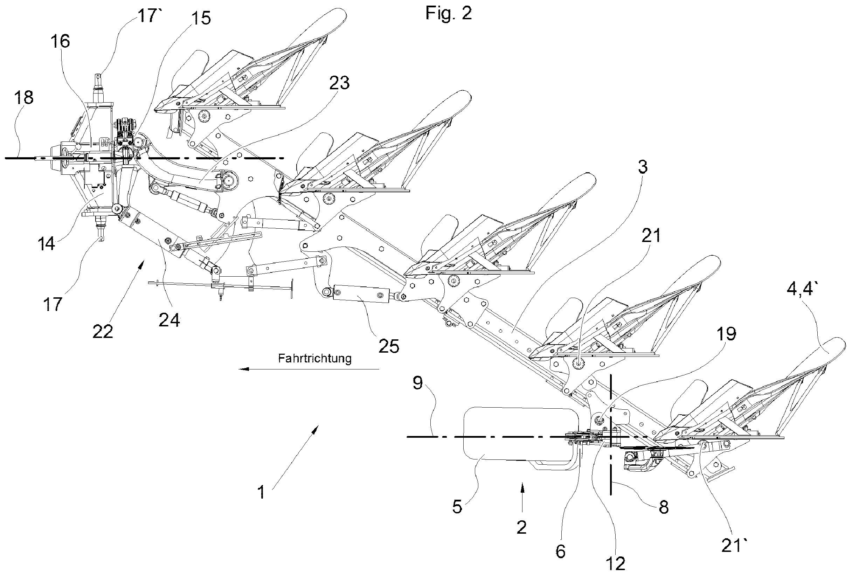

Figur 2 zeigt den zuvor beschriebenen Drehpflug in Draufsicht und in Arbeitsstellung. Die nicht dargestellten Ober- und Unterlenker der Dreipunkthydraulik des Traktors werden am Anbaurahmen 14 an den dafür vorgesehenen Koppelpunkten 16,17, 17' befestigt. Wie zuvor beschrieben, kann der Pflugrahmen 3 mit seinen daran befestigten Pflugkörpern 4, 4' um die Wendeachse 18 von einer dargestellten, rechtswendenden in eine linkswendende Position vorzugsweise mittels des Hydraulikzylinders 15 verschwenkt werden. Über einen Lenker 23 sowie Bolzenlagerungen ist der Pflugrahmen 3 seitlich beweglich mit der Wendeachse 18 verbunden. Über ein Einstellcenter 22 kann mittels Stellmotoren oder Spindeln die Vorderfurchenbreite und der Zugpunkt des Pfluges eingestellt werden. Auch Schlittenführungen zur seitlichen Bewegungen des Pflugrahmens sind möglich. Mittels eines Einschwenkzylinders 24 kann das hintere Ende des Pflugrahmens 3 weiter mittig zur Achse 18 eingeschwenkt werden, um die Bodenfreiheit des ausgehobenen Pfluges beim Wenden zu erhöhen. Ein weiterer Stellmotor 25 ist zum Ausschwenken des Pflugrahmens bei paralleler Verstellung des Schnittbreite der einzelnen Pflugkörper 4,4' vorgesehen. Im hinteren Bereich des Pflugrahmens 3 ist das Schwenkstützrad 2 seitlich schwenkbar um die Achse 19 am Pflugrahmen befestigt. Eine Parallelführung bei Verstellung der Schnittbreite der einzelnen Pflugkörper 4,4' durch Schwenken um die Achse 21,21' ist durch ein nicht dargestelltes Gestänge ermöglicht. Um die Achse 9, welche schräg zum Boden und nach vorne zeigt, ist der Schwenkarm 6 und das Stützrad 5 drehbar gelagert. Von dieser Schwenklagerung umgreift der Schwenkarm 6 den Reifenmantel des Stützrades 5 und taucht mittig in dessen Felge ein. Nicht sichtbar ist innerhalb der Felge einer Radnabe drehbar am Schwenkarm 6 gefestigt und ermöglicht das Abrollen des Stützrades 5 auf der Bodenoberfläche. Die Wirklinie des Schwenkarmes 6 liegt nahezu mit der Achse 9 überein, kann aber auch geringfügig davon abweichen. Wichtig ist, dass die Achse 9 ungefähr die Mittelebene des Rades, welche vertikal zur Laufachse des Rades steht, in Höhe der Bodenoberfläche schneidet, wobei dieser Schnittpunkt in Fahrtrichtung oder zum Zugtraktor gerichtet und beabstandet zum Radkontaktpunkt liegt. Auch die Verwendung von Zwillings- oder Doppelrädern ist denkbar, wobei dann die Achse 9 bzw. die zuvor beschriebene Mittelebene vorzugsweise mittig zwischen diesen Rädern liegt. Ebenso werden der Schnittpunkt 11 und der Radkontaktpunkt 10 zumindest annähernd mittig zwischen diesen Rädern gebildet. Die Schwenkachse 8 der Schwenklagerung 12 ist zumindest annähernd senkrecht zur Fahrtrichtung ausgerichtet, kann aber auch weiter gegen die Längsachse des Pflugrahmens 3 aufgerichtet werden, um weniger Schwenkfreiraum zur Bodenoberfläche zu benötigen. In diesem Falle ist die zumindest annähernd senkrechte Ausrichtung der Achse 9 zu Achse 8 entsprechend der Fahrtrichtung komplementär zu kompensieren.

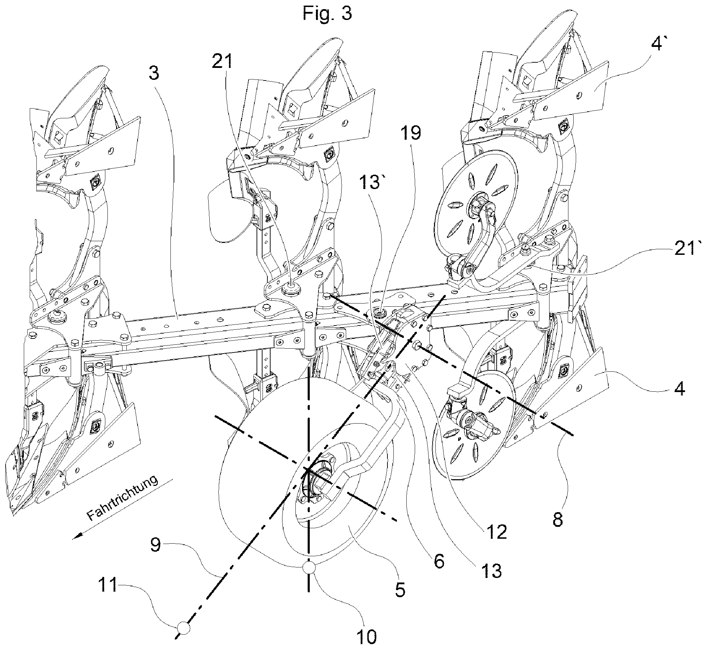

In Figur 3 ist das Schwenkstützrad 2 mit dem hinteren Teil des Drehpfluges 1 in Arbeitsstellung dargestellt. Um die Achse 19 ist die Schwenklagerung seitlich schwenkbar zum Pflugrahmen 3 befestigt. Entsprechend der Winkelstellung des Pflugrahmens 3 zur Fahrtrichtung kann das Schwenkstützrad 2 in einem annähernd gleichen Winkel parallel zur Fahrtrichtung ausgerichtet werden. Diese Ausrichtung kann manuell, beispielsweise durch Umstecken eines Bolzens oder anderer Einstellmittel, oder automatisch durch eine Parallelführeinrichtung erfolgen. In gewissem Maße ist auch eine fixe, von der Fahrtrichtung abweichende Winkelstellung möglich, soweit sie durch die Selbstlenk- oder Nachlaufeigenschaften des Schwenkstützrades 2 kompensiert werden kann. Dies gilt für alle beschriebenen Achsausrichtungen, welche die Funktion des Schwenkstützrades 2 beeinflussen. Die Pflugkörper 4, 4' und ihre Halmtaschen sind über die Schwenkachsen 21, 21' drehbar zum Zugrahmen 3 gelagert. Über ein Parallelführgestänge werden die Pflugkörper 4, 4' in Fahrtrichtung ausgerichtet und somit eine variable Schnittbreitenverstellung des Drehpfluges 1 bzw. seiner Pflug Körper 4, 4' ermöglicht. In idealer Weise wird das Schwenkstützrad 2 bzw. seine Schwenklagerung 12 mit dieser Parallelführung gekoppelt oder gleich an einer der Schwenklagerungen 21, 21' befestigt und ebenfalls in Fahrtrichtung ausgerichtet. In der gezeigten Arbeitsstellung wird das Schwenkstützrad 2 durch ein Anschlagmittel 13', welche als kippbare Anschlagspindel ausgeführt ist, gegen einen Anschlag der Schwenklagerungen 12 fixiert. Beim Wenden des Pfluges fällt das Anschlagmittel 13' in eine inaktive Stellung. Das Schwenkstützrad 2 kann um die Achse 8 in eine gegenüberliegende Stellung schwenken, in welcher es durch das gegenüberliegende Anschlagmittel 13 in gleicher Funktion wieder fixiert wird. Ebenso ist der Einsatz von Stellmotoren, beispielsweise einem entsperrbaren Hydraulikzylinder oder andere Arretierungsmittel zur Festsetzung des Schwenkstützrades und Vorgabe einer Arbeitstiefe des Drehpfluges 1 möglich. Die seitlichen Kräfte, welche in Arbeitsstellung des Drehpfluges 1 am Radkontaktpunkt 10 auf das Stützrad 51 wirken, richten dieses mit einem wirksamen Hebelabstand, welcher zwischen Achse 9 und Radkontaktpunkt 10 gebildet wird, selbstlenkend in Fahrtrichtung aus. Der Schnittpunkt 11 der Achse 9 mit der Bodenoberfläche bildet dabei den gedachten Führungspunkt, um welchen das Stützrad 5 nachläuft. Das Stützrad 5 kann ein Reifen mit Felge sein, ebenso aber auch ein Stahlrad oder eine Walzenform. Das Stützrad kann zudem mit einem umlaufenden Führungssteg oder Profil versehen sein, welches die Lenk- oder Abrolleigenschaften auf dem Boden verbessert.

**BEZUGSZEICHENLISTE**

| | |
|---|---|
| 1 | Drehpflug |
| 2 | Schwenkstützrad |
| 3 | Pflugrahmen |
| 4 | Pflugwerkzeug, Plfugkörper |
| 5 | Stützrad |
| 6 | Arm, Schwenkarm |
| 7 | Boden, Bodenoberfläche |
| 8 | Achse, Schwenkachse |
| 9 | Achse, Lenkachse |
| 10 | Radkontaktpunkt |
| 11 | Schnittpunkt |
| 12 | Schwenklagerung |
| 13 | Anschlagmittel |
| 14 | Anbaurahmen |
| 15 | Hydraulikzylinder |
| 16 | Koppelpunkt |
| 17 | Koppelpunkt |
| 18 | Wendeachse |
| 19 | Achse, Schwenkachse |
| 20 | Mittelebene |
| 21 | Achse, Schwenkachse |
| 22 | Einstellcenter |
| 23 | Lenker |
| 24 | Einschwenkzylinder |
| 25 | Stellmotor |

## Patentansprüche

1. Drehpflug (1) mit Schwenkstützrad (2) zum Anbau an einen Pflugrahmen (3) des Drehpfluges (1), wobei der Pflugrahmen (3) mit mehreren, daran paarweise gegenüberliegend befestigten, spiegelbildlichen Pflugkörpern (4,4') durch eine Drehung von nahezu 180 Grad von einer linkswendenden in eine rechtswendende Position gebracht werden kann, wobei am Pflugrahmen (3) zumindest ein Stützrad (5) zur Tiefenbegrenzung der Pflugkörper (4,4') über einen Arm (6) schwenkbar angebracht ist, wobei der Arm (6) zur Lagerung des Stützrades (5) um eine erste, zumindest annähernd parallel zur Bodenoberfläche (7) oder zumindest annähernd durch die Mittelebene (20) des Pflugrahmens (3) verlaufende Achse (8) bei der Drehung des Pflugrahmens (3) in seinem Schwenkwinkel begrenzt rotiert und nach dieser Rotation durch eine weitere Vorrichtung in eine der Pflugausrichtung entsprechende, jeweilige Arbeitsstellung arretiert werden kann, wobei die Bewegung des Armes (6) um die erste Achse (8) in Fahrtrichtung oder nach vorn gerichtet erfolgt und einen max. Schwenkwinkel (α) von 160 Grad beschreibt, wobei eine zweite Achse (9), welche zumindest annähernd durch eine senkrecht zur Bodenoberfläche (7) und zumindest annähernd parallel zur Fahrtrichtung verlaufenden Ebene angeordnet ist, wobei die zweite, nach vorne geneigte Achse (9) vor dem Radkontaktpunkt (10) mit der Bodenoberfläche (7) einen Schnittpunkt (11) bildend angeordnet ist, welcher den gedachten Führungspunkt bildet, um welchen das Stützrad (5) nachläuft,
**dadurch gekennzeichnet, dass** der Arm (6) oder das Stützrad (5) um die zweite Achse (9) drehbar gelagert ist.

2. Drehpflug mit Schwenkstützrad nach Anspruch 1,
**dadurch gekennzeichnet,**
**dass** die Schwenkbewegung des Armes (6) oder des Stützrades (5) um die zweite Achse (9) von einer Mittelstellung nach rechts und links auf einen Schwenkwinkel von jeweils max. 60 Grad begrenzt ist.

3. Drehpflug mit Schwenkstützrad nach Anspruch 2,
**dadurch gekennzeichnet,**
**dass** die Schwenkbewegung um die zweite Achse (9) von einer Mittelstellung nach rechts und links auf einen Schwenkwinkel von jeweils max. 20 Grad begrenzt ist.

4. Drehpflug mit Schwenkstützrad nach Anspruch 1, 2 oder 3,
**dadurch gekennzeichnet,**
**dass** der Arm (6) oder die Schwenklagerung (12) in Richtung der zweiten Achse (9) teleskopier- oder verschiebbar ausgeführt ist.

5. Drehpflug mit Schwenkstützrad nach zumindest einem der vorstehenden Ansprüche,
**dadurch gekennzeichnet,**
**dass** das Schwenkstützrad (2), die Schwenklagerung (12) oder der Arm (6) um eine dritte Achse (19), welche annähernd senkrecht zur Bodenoberfläche (7) oder zur Symmetrieebene (20) des Pflugrahmens (4) angeordnet ist, schwenkbar gelagert ist.

6. Drehpflug mit Schwenkstützrad nach zumindest einem der vorstehenden Ansprüche,
**dadurch gekennzeichnet,**
**dass** die dritte Achse (19), um welche das Schwenkstützrad (2), die Schwenklagerung (12) oder der Arm (6) schwenkbar gelagert ist, der Schwenkachse (21, 21') eines Pflugkörpers (4,4') oder Pflugkörperpaares entspricht.

7. Drehpflug mit Schwenkstützrad nach zumindest einem der vorstehenden Ansprüche,
**dadurch gekennzeichnet,**
**dass** Mittel, welche die Schwenkgeschwindigkeit des Schwenkstützrades (2) oder des Armes (6) um die erste und/oder zweite Achse (8,9) begrenzen, am Arm (6) oder am Pflugrahmen (3) angeordnet sind.

8. Drehpflug mit Schwenkstützrad nach zumindest einem der vorstehenden Ansprüche,
**dadurch gekennzeichnet,**
**dass** die Schwenkbewegung des Schwenkstützrades (2) um die erste und/oder zweite Achse (8,9) durch zumindest eine Fremdkrafteinrichtung unterstützend oder blockierend ausgebildet ist.

9. Drehpflug mit Schwenkstützrad nach zumindest einem der vorstehenden Ansprüche,
**dadurch gekennzeichnet,**
**dass** die Bewegung des Schwenkstützrades (2) oder des Armes (6) um die zweite Achse (9) mittels Arretiermittel in einer zur mittleren Position um 90 Grad verdrehten Stellung festsetzbar ausgebildet ist.

10. Drehpflug mit Schwenkstützrad nach zumindest einem der vorstehenden Ansprüche,
**dadurch gekennzeichnet,**
**dass** das Schwenkstützrades (2) in der Nähe des letzten oder des vorletzten Pflugkörpers (4,4') befestigt ist.

## Claims

1. Rotary plow (1) with pivoting support wheel (2) for mounting on a plow frame (3) of a rotary plow (1), wherein the plow frame (3) comprising a plurality of mirror-inverted plow bodies (4, 4') lying opposite one another in pairs may be brought from a right-hand turning into a left-hand turning position by a rotation of nearly 180°, wherein a support wheel (5) is pivotably mounted on the plow frame (3) for depth limitation of the plow bodies (4, 4') by means of an arm (6), wherein the arm (6) supporting the support wheel (5) is limited in its pivot angle about a first axis (8) at least approximately parallel to the ground surface (7) or at least approximately running through the middle plane (20) of the plow frame (3) upon turning of the plow frame (3), and may be locked into a respective working position corresponding to the plow orientation following this rotation by a further device, wherein the movement of the arm (6) takes place about the first axis (8) in the direction of travel or is aligned forwards and describes a maximum angle (α) of 160°, wherein a second axis (9) which is arranged in a plane running at least approximately perpendicular to the ground surface (7) and at least approximately parallel to the direction of travel, wherein the second forwardly-inclined axis (9) is arranged in front of the wheel contact point (10) in order to form an intersection point (11) with the ground surface (7), which forms an imaginary guide point, around which the support wheel 5 follows.
**characterized in that**
the arm (6) or the support wheel (5) is mounted to rotate about the second axis (9).

2. Rotary plow with pivoting support wheel according to claim 1,
**characterized in that**
the pivoting movement of the arm (6) or of the support wheel (5) about the second axis (9) is respectively offset to the right and left from a middle position by a pivot angle of maximum of 60°.

3. Rotary plow with pivoting support wheel according to claim 2,
**characterized in that**
the pivoting movement about the second axis (9) from a middle position is respectively limited to a pivot angle of a maximum of 20° to the right and the left.

4. Rotary plow with pivoting support wheel according to claim 1, 2 or 3,
**characterized in that**
the arm (6) or the pivot bearing (12) may be telescoped or displaced in the direction of the second axis (9).

5. Rotary plow with pivoting support wheel according to at least one of the preceding claims,
**characterized in that**
the pivoting support wheel (2), the pivot bearing (12) or the arm (6) is pivotable about a third axis (19) which is arranged approximately perpendicular to the ground surface (7) or to the plane of symmetry (20) of the plow frame (4).

6. Rotary plow with pivoting support wheel according to at least one of the preceding claims,
**characterized in that**
the third axis (19) about which the pivoting support wheel (2), the pivot bearing (12) or the arm (6) is pivotally mounted, corresponds to the pivot axis (21, 21') of a plow body (4, 4') or plow body pair.

7. Rotary plow with pivoting support wheel according to at least one of the preceding claims,
**characterized in that**
means to limit the pivotal speed of the pivoting support wheel (2) or of the arm (6) about the first and/or second axis (8, 9) are arranged on the arm (6) or on the plow frame (3).

8. Rotary plow with pivoting support wheel according to at least one of the preceding claims,
**characterized in that**
the pivoting movement of the pivoting support wheel (2) about the first axis and/or the second axis (8, 9) is supported or blocked by at least one external power device.

9. Rotary plow with pivoting support wheel according to at least one of the preceding claims,
**characterized in that**
the movement of the pivoting support wheel (2) or of the arm (6) about the second axis (9) may be limited by means of locking means in a position rotated through 90° with respect to the middle position.

10. Rotary plow with pivoting support wheel according to at least one of the preceding claims,
**characterized in that**
the pivoting support wheel (2) is fastened in the vicinity of the last or the next to last plow body (4, 4').

## Revendications

1. Charrue réversible (1) avec roue d'appui pivotante (2) pour le montage sur un châssis de charrue (3) de la charrue réversible (1), le châssis de charrue (3) pouvant être mis, avec plusieurs corps de charrue (4, 4') fixés à celui-ci par paires, de manière opposée en miroir, d'une position de rotation vers la gauche vers une position de rotation vers la droite par une rotation de presque 180 degrés, moyennant quoi, sur le châssis de charrue (3), est montée de manière pivotante au moins une roue d'appui (5) pour la limitation en profondeur des corps de charrue (4, 4') par l'intermédiaire d'un bras (6), le bras (6) tournant de manière limitée, pour le logement de la roue d'appui (5), autour d'un premier axe (8) au moins approximativement parallèle à la surface du sol (7) ou traversant au moins approximativement le plan central (20) du châssis de charrue (3) lors de la rotation du châssis de charrue (3) avec son angle de pivotement et, pouvant être bloqué, après cette rotation, par un dispositif supplémentaire, dans une position de travail correspondant à l'orientation de la charrue,
le déplacement du bras (6) autour du premier axe (8) ayant lieu dans le sens de la marche ou étant dirigé vers l'avant et décrivant un angle de pivotement maximal (α) de 160 degrés, un deuxième axe (9), qui est disposé au moins approximativement à travers un plan perpendiculaire à la surface du sol (7) et au moins approximativement parallèle au sens de la marche, le deuxième axe (9) incliné vers l'avant étant disposé de façon à former, avant le point de contact de la roue (10) avec la surface du sol (7), un point de croisement (11), qui forme le point de guidage imaginaire que suit la roue d'appui (5),
**caractérisé en ce que** le bras (6) ou la roue d'appui (5) est logé de manière rotative autour du deuxième axe (9).

2. Charrue réversible avec roue d'appui pivotante selon la revendication 1,
**caractérisée en ce que**
le mouvement de pivotement du bras (6) ou de la roue d'appui (5) autour du deuxième axe (9) d'une position centrale vers la droite et vers la gauche est limité à un angle de pivotement de 60 degrés maximum.

3. Charrue réversible avec roue d'appui pivotante selon la revendication 2,
**caractérisée en ce que**
le mouvement de pivotement autour du deuxième axe (9) d'une position centrale vers la droite et vers la gauche est limité à un angle de pivotement de 20 degrés maximum.

4. Charrue réversible avec roue d'appui pivotante selon la revendication 1, 2 ou 3,
**caractérisée en ce que**
le bras (6) ou le palier pivotant (12) est conçu de manière télescopique ou coulissante en direction du deuxième axe (9).

5. Charrue réversible avec roue d'appui pivotante selon au moins l'une des revendications précédentes,
**caractérisée en ce que**
la roue d'appui pivotante (2), le palier pivotant (12) ou le bras (6) est logé de manière pivotante autour d'un troisième axe (19), qui est approximativement perpendiculaire à la surface du sol (7) ou au plan de symétrie (20) du châssis de charrue (4).

6. Charrue réversible avec roue d'appui pivotante selon au moins l'une des revendications précédentes,
**caractérisée en ce que**
le troisième axe (19), autour duquel la roue d'appui pivotante (2), le palier pivotant (12) ou le bras (6) est logé de manière pivotante, correspond à l'axe de pivotement (21, 21') d'un corps de charrue (4, 4') ou d'une paire de corps de charrue.

7. Charrue réversible avec roue d'appui pivotante selon au moins l'une des revendications précédentes,
**caractérisée en ce que**
des moyens, qui limitent la vitesse de pivotement de la roue d'appui pivotante (2) ou du bras (6) autour du premier et/ou du deuxième axe (8, 9), sont disposés sur le bras (6) ou sur le châssis de charrue (3).

8. Charrue réversible avec roue d'appui pivotante selon au moins l'une des revendications précédentes,
**caractérisée en ce que**
le mouvement de pivotement de la roue d'appui pivotante (2) autour du premier et/ou du deuxième axe (8, 9) est conçu de façon à assister ou à bloquer un dispositif à force extérieur.

9. Charrue réversible avec roue d'appui pivotante selon au moins l'une des revendications précédentes,
**caractérisée en ce que**
le mouvement de la roue d'appui pivotante (2) ou du bras (6) autour du deuxième axe (9) est conçu de façon à pouvoir être immobilisé à l'aide de moyens de blocage dans une position tournée de 90 degrés par rapport à la position centrale.

10. Charrue réversible avec roue d'appui pivotante selon au moins l'une des revendications précédentes,
**caractérisée en ce que**
la roue d'appui pivotante (2) est fixée à proximité du dernier ou de l'avant-dernier corps de charrue (4, 4').
